# FASCICULE DE BREVET EUROPEEN

(11) **EP 0 465 299 B1**
(45) Date de publication et mention de la délivrance du brevet: **08.02.1995**
(21) Numéro de dépôt: 91401706.6
(22) Date de dépôt: 25.06.1991
(51) Int. Cl.: F16D 23/14

(54) **Butée de débrayage actionnée par traction**
Durch Zug betätigtes Kupplungsausrücklager
Clutch release bearing actuated by traction

(30) Priorité: 05.07.1990 FR 9008555
(43) Date de publication de la demande: 08.01.1992
(73) Titulaire: S.N.R. ROULEMENTS, 74010 Annecy Cédex (FR)
(72) Inventeur: Mermoud, Gérard, F-74330 La Balme de Sillingy (FR); Gautier, François, F-74940 Annecy le Vieux (FR)
(74) Mandataire: Ernst-Schonberg, Michel

(56) Documents cités:
- DE-A- 3 921 842
- FR-A- 2 611 009

## Description

L'invention concerne une butée de débrayage actionnée par traction, conforme au préambule de la revendication indépendante.

L'invention s'applique notamment à une butée portant un moyen de solidarisation de la bague tournante avec un dispositif débrayeur tel qu'un diaphragme et un élément élastique de maintien de la liaison axiale entre ledit dispositif et la bague tournante.

Une telle butée décrite par la publication FR-A-2 558 228 utilisée pour la manoeuvre des embrayages à disque est montée à coulissement sur l'arbre d'entrée de la boîte de vitesses. Un problème que posent ces butées résulte des opérations de montage et de démontage de la boîte de vitesses. Au cours de ces opérations les constituants de la butée sont soumis à des efforts de poussée ou de traction. Lorsque les bagues du roulement sont en tôle emboutie celles-ci subissent alors des contraintes dont l'intensité est susceptible d'endommager le roulement.

Selon un mode de réalisation connu par la publication FR-A-2 624 229 des pinces d'assemblage solidarisent le manchon avec la bague fixe du roulement et avec l'organe de retenue de la fourchette. De ce montage résulte une augmentation du nombre de composants de la butée et une difficulté d'obtenir une simplification dit processus de montage de la butée.

L'invention concerne une butée de débrayage qui remédie aux problèmes précités et trouvent une solution dans la caractéristique de la revendication indépendante.

La butée ainsi réalisée peut recevoir des efforts de basculement ou des efforts axiaux au cours des phases d'assemblage ou de séparation de la butée avec le mécanisme d'embrayage sans préjudice pour le roulement.

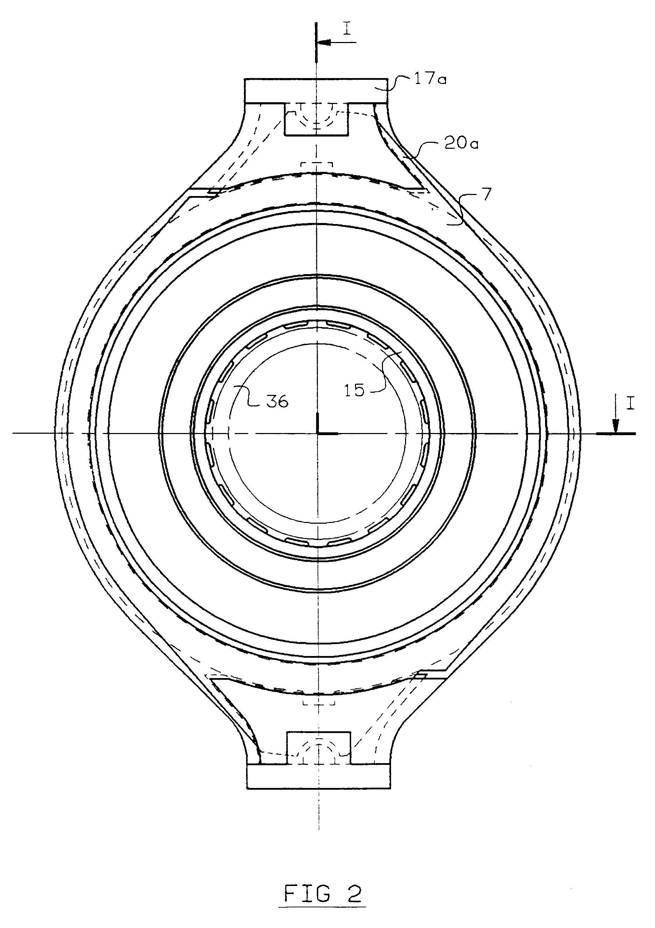

D'autres caractéristiques et avantages de l'invention ressortiront de la description qui va suivre d'un exemple de réalisation de la butée, en référence au dessin annexe sur lequel
- la figure 1 est une vue en coupe axiale d'un montage de la butée de débrayage suivant l'invention suivant la ligne I-I de la figure 2,
- la figure 2 est une vue en bout de la butée,
- la figure 3 est une vue en perspective de l'extension radiale du manchon,
- la figure 4 est une vue en plan de l'anneau limiteur de déplacements du roulement de butée,
- la figure 5 est une vue en élévation de l'anneau représenté à la figure 4,

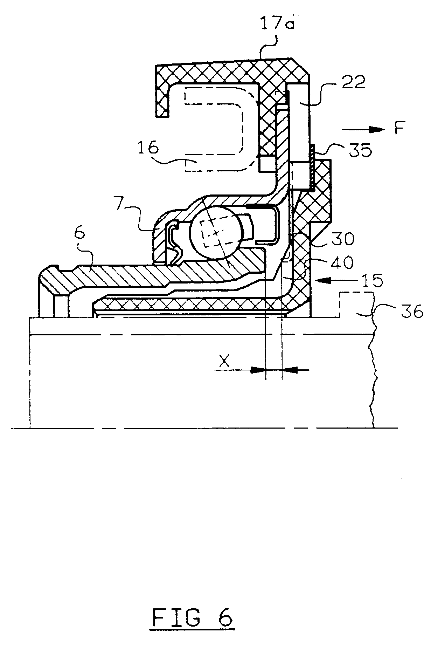

- la figure 6 est une demi vue en coupe axiale de la butée avant réglage.

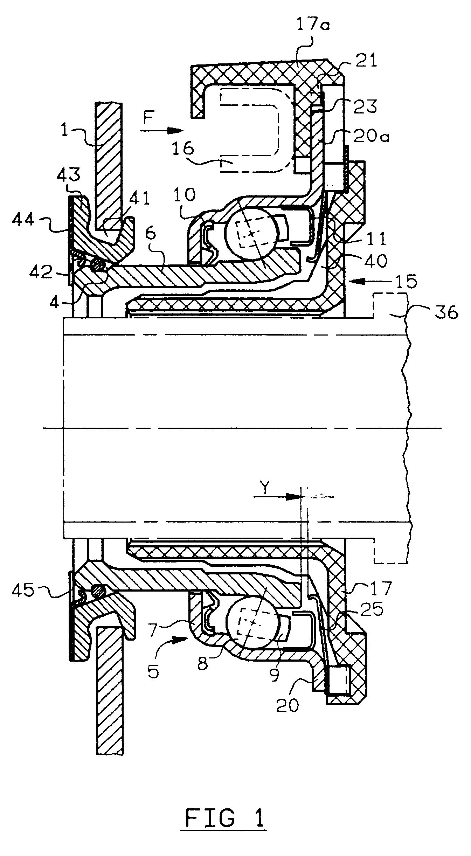

Dans la forme de mise en oeuvre de l'invention, le dispositif débrayeur 1 est de manière connue en soi formé par l'extrémité des doigts radiaux d'un diaphragme. De manière également connue en soi par la publication EP-A-0 320 364 pour l'attelage de la butée de débrayage au dispositif débrayeur, nécessaire à une action en traction de cette butée, il est rapporté sur ce dernier, à la faveur de l'ouverture centrale 41 du diaphragme une pièce annulaire 43 portant une bague à ressort 44 à languettes élastiques 45. Un jonc annulaire 42 élastiquement déformable radialement est engageable à des fins de solidarisation de la pièce annulaire 43 avec la butée de débrayage dans une gorge de retenue 4 ménagée pour lui sur un élément de la butée formé par la bague intérieure tournante 6 d'un roulement 5. Ainsi que cela est montré à la figure 1, le roulement 5 comporte une bague extérieure fixe 7, des corps roulants 8 disposés dans les alvéoles d'une cage 9 et placés entre les bagues 6 et 7. L'étanchéité du roulement 5 est assurée par un joint d'étanchéité 10 et par un déflecteur 11 respectivement solidarisés avec la bague fixe 7.

Le roulement 5 est monté sur un manchon 15 qui coulisse le long d'un guide 36 tel qu'un arbre d'entrée de boîte de vitesses sous l'action d'un effort d'appui communiqué par une fourchette 16. La fourchette 16 exerce ainsi que cela est bien connu, une force de débrayage suivant le sens de la flèche F de la figure 1, sur une extension radiale 17a dit manchon 15.

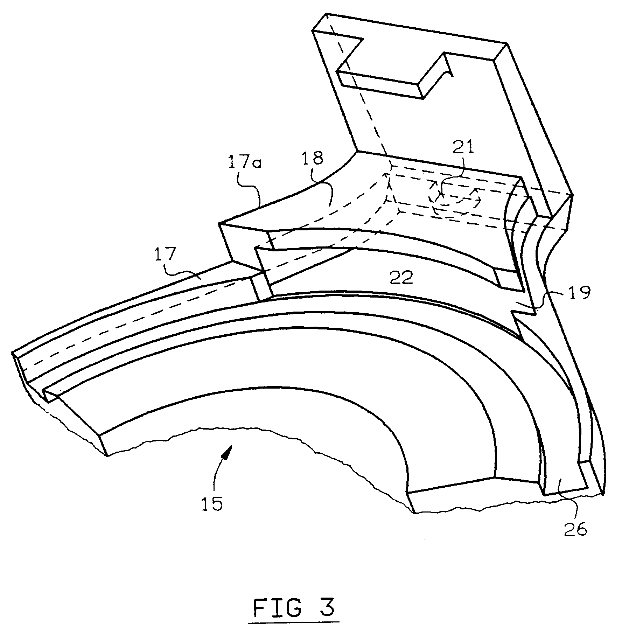

Une telle extension 17a, montrée plus en détail à la figure 3, comporte une paroi de butée axiale 18 qui se raccorde latéralement a la paroi 17. La paroi 18 de l'extension 17a décalée axialement par rapport à la paroi 17 et ménage une fente latérale d'introduction 19 d'une oreille 20a de la paroi radiale 20 de la bague fixe 7. La paroi 18 et la paroi 17 délimitent de la sorte un logement 22 de l'oreille 20a et son fond porte un ergot 21 d'immobilisation et de butée radiale et angulaire de la bague fixe 7 au niveau de l'oreille 20a munie d'une encoche de réception 23 dudit ergot 21. Le fond opposé à la paroi 18 du logement 22 constitue une fenêtre d'introduction d'un outil de manoeuvre angulaire d'un anneau de réglage 25.

L'anneau de réglage 25 possède une fonction de limitation de déplacement axial de la bague intérieure tournante 6.

A cet effet la paroi 17 du manchon 15 porte une gorge circulaire 26 d'appui direct et de centrage de l'anneau 25.

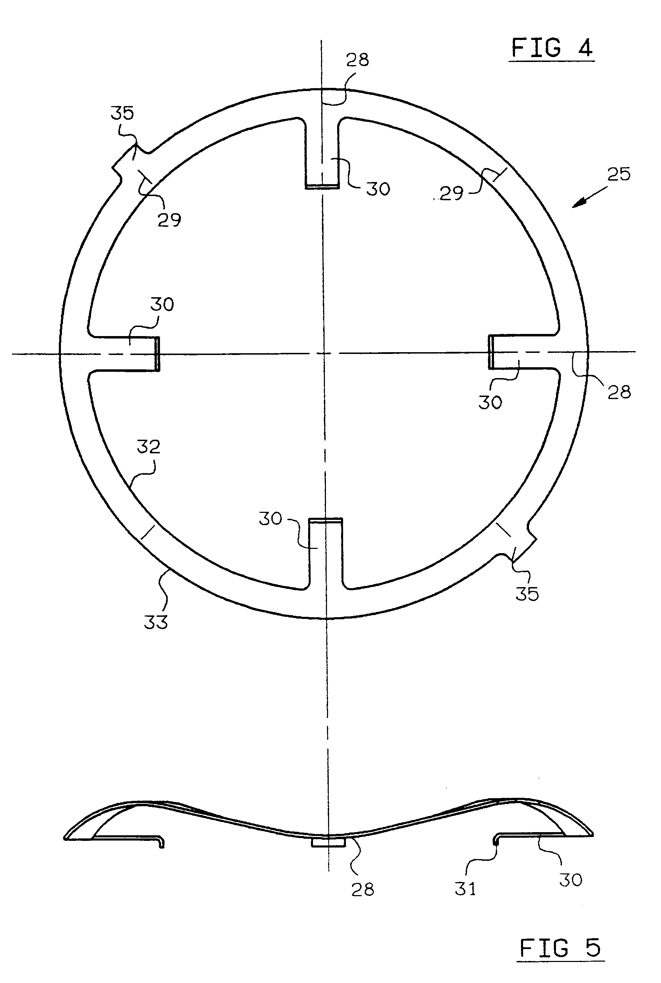

L'anneau 25 représenté aux figures 4 et 5 est constitué par une couronne circulaire à surface ondulée. Tel que représenté, l'anneau 25 possède quatre ondulations dont la partie convexe 28 est tournée vers la bague tournante 6. La partie concave 29 des ondulations de l'anneau est de ce fait en appui sur le fond de la gorge 26. Les parties convexes 28 portent des doigts radiaux flexibles 30 avec des terminaisons axiales 31 raccordés au bord intérieur 32 de l'anneau. Les parties concaves 29 portent deux ergots 35 diamétralement opposés raccordés au bord extérieur 33 de l'anneau destinés à être manoeuvrés au travers du fond 22 de l'extension 17a.

Les doigts flexibles 30 sont en appui sur des rampes 40 situées à la base de la paroi 17 du manchon 15 dont l'orientation est dirigée vers le manchon. Cette mesure constructive permet la déflexion des doigts 30 en direction de l'extrémité axiale de la bague tournante 6 a la suite de la manoeuvre de l'anneau 25 et réduit de ce fait la distance X axiale de bague 6 par rapport au manchon à la valeur Y.

Le montage de la butée est opéré comme suit : l'ensemble constitutif du roulement 5 est monté sur le manchon 15. Ce dernier porte l'anneau de réglage 25 mis en place dans la gorge circulaire 26. Le roulement 5 est amené en appui sur la paroi 17 dans une position telle que les oreilles 20a soient introduites dans la fente 19 des extensions 17a en comprimant l'anneau 25.

Chaque oreille 20a avec son encoche 23 est placée entre l'ergot 21 et le fond 22. Lorsque la pression sur l'anneau 25 est relachée, ce dernier repousse axialement l'encoche 23 vers l'ergot 21. L'anneau 25 est ensuite déplacé angulairement pour obtenir la flexion des doigts 30 dans le but de réduire la distance axiale entre l'extrémité de la bague tournante 6 et le manchon, à la valeur Y.

## Revendications

1. Butée de débrayage actionnée par traction, qui comporte un manchon coulissant (15), un roulement (5) monté sur ledit manchon, ledit roulement possèdant une bague fixe (7) soumise à une force de débrayage par l'intermédiaire d'une fourchette (16), des corps roulants (8) de transmission de la force de débrayage et une bague tournante (6) de réception de ladite force, caractérisée par le fait que la bague fixe (7) est localement encastrée dans une extension radiale (17a) du manchon et d'appui de la fourchette (16) tandis que ladite extension est en partie décalée par rapport au plan d'une paroi radiale (17) d'appui de la bague fixe (7) et que ladite paroi (17) est en appui sur un anneau (25) de réglage limiteur de déplacement axial de la bague tournante (6) par rapport au manchon (15).

2. Butée selon la revendication 1, caractérisée par le fait que le sommet de l'extension (17a) de la paroi radiale du manchon porte une butée de limitation (21) de déplacement de la bague fixe (7) et que la base de ladite extension radiale porte une rampe (40) de commande de flexion de l'anneau de réglage (25) de déplacement de la bague tournante (6).

3. Butée selon la revendication 2, caractérisée par le fait que la butée de limitation (21) de déplacement de la bague fixe (7) du roulement est engagée dans une encoche (23) de ladite bague.

4. Butée selon la revendication 2, caractérisée par le fait que l'anneau (25) de réglage est constitué par une couronne circulaire à surface ondulée qui porte des doigts radiaux (30) flexibles raccordés au bord intérieur (32) de l'anneau et des ergots de manoeuvre (35) raccordés à son bord extérieur (33).

5. Butée selon la revendication 4, caractérisée par le fait que chaque doigt (30) possède une terminaison axiale (31) de limitation de course de la bague tournante (6).

6. Butée selon l'une quelconque des revendications 1 à 5, caractérisée par le fait que l'extension radiale (17a) du manchon (15) à surface d'appui de la fourchette possède une fenêtre d'introduction d'un outil de manoeuvre angulaire de l'anneau de réglage (25).

## Claims

1. A clutch release bearing actuated by traction, comprising a sliding sleeve (15), a roller bearing (5) mounted on this sleeve, this roller bearing comprising a fixed ring (7) subject to a disengaging force by means of a fork (16), rolling bodies (8) for the transmission of the disengaging force and a rotary ring (6) receiving this force, characterised in that the fixed ring (7) is locally embedded in a radial extension (17a) of the sleeve and supporting the fork (16) while this extension is partially offset with respect to the plane of a radial wall (17) supporting the fixed ring (7) and in that this wall (17) bears on an adjustment ring (25) limiting the axial displacement of the rotary ring (6) with respect to the sleeve (15).

2. A bearing as claimed in claim 1, characterised in that the apex of the extension (17a) of the radial wall of the sleeve bears an abutment (21) limiting the displacement of the fixed ring (7) and in that the base of this radial extension bears a ramp (40) controlling the bending of the adjustment ring (25) for the displacement of the rotary ring (6).

3. A bearing as claimed in claim 2, characterised in that the abutment (21) limiting the displacement of the fixed ring (7) of the roller bearing is engaged in a slot (23) of this ring.

4. A bearing as claimed in claim 2, characterised in that the adjustment ring (25) is formed by a circular crown with a corrugated surface which bears flexible radial fingers (30) connected to the inner edge (32) of the ring and manoeuvring pins (35) connected to its outer edge (33).

5. A bearing as claimed in claim 4, characterised in that each finger (30) comprises an axial end (31) limiting the stroke of the rotary ring (6).

6. A bearing as claimed in any one of claims 1 to 5, characterised in that the radial extension (17a) of the sleeve (15) having a bearing surface for the fork comprises a window for the introduction of an angular manoeuvring tool for the adjustment ring (25).

## Patentansprüche

1. Durch Zug betätigtes Kupplungsausrücklager, mit einer Gleitbuchse (15), mit einem an der Buchse angeordneten Lager (5), welches einen feststehenden Ring (7) aufweist, der mit der Kupplungskraft über eine Gabel (16) beaufschlagt wird, mit Rollkörpern (18) zur Übertragung der Kupplungskraft und mit einem Drehring (6) zur Aufnahme dieser Kraft, dadurch gekennzeichnet, daß der feststehende Ring (7) örtlich eingeklemmt ist in einer radialen Erhöhung (17a) der Buchse zur Abstützung der Gabel (16) während die Erhöhung teilweise verschoben ist bezüglich der Ebene einer radialen Stützwand (17) für den feststehenden Ring (7), und daß die Wand (17) sich auf einem Einstellring (25) abstützt, der die Axialverschiebung des Drehringes (6) bezüglich der Buchse (15) begrenzt.

2. Ausrücklager nach Anspruch 1, dadurch gekennzeichnet, daß das Oberteil der Erhöhung (17a) der Radialwand der Buchse einen Begrenzungsanschlag (21) für die Verschiebung des feststehenden Ringes (7) trägt und daß das Unterteil dieser radialen Erhöhung eine Rampe (40) zur Steuerung der Durchbiegung des Einstellringes (25) für die Verschiebung des Drehrings (6) trägt.

3. Ausrücklager nach Anspruch 2, dadurch gekennzeichnet, daß der Begrenzungsanschlag (21) für die Verschiebung des feststehenden Ringes (7) des Lagers in eine Aussparung (23) des Ringes eingreift.

4. Ausrücklager nach Anspruch 2, dadurch gekennzeichnet, daß der Einstellring (25) aus einem kreisförmigen Kranz mit gewellter Oberfläche besteht, welcher flexible radiale Finger (30) trägt, die mit dem Innenrand (32) des Ringes verbunden sind, während Betätigungszapfen (35) mit seinem Außenring (33) verbunden sind.

5. Ausrücklager nach Anspruch 4, dadurch gekennzeichnet, daß jeder Finger (30) mit einem axialen Endstück (31) zur Begrenzung des Weges des Drehringes (6) versehen ist.

6. Ausdrücklager nach einem der Ansprüche 1 bis 5, dadurch gekennzeichnet, daß die radiale Erhöhung (17a) der Buchse (15) mit einer Stützfläche für die Gabel ein Einführfenster für ein Werkzeug zur winkelmäßigen Betätigung des Einstellringes (25) aufweist.
